# EUROPEAN PATENT APPLICATION

(11) **EP 2 535 178 A1**
(43) Date of publication of application: **19.12.2012**
(21) Application number: 12171854.8
(22) Date of filing: 13.06.2012
(51) Int. Cl.: B32B 3/26, B32B 5/04, B32B 7/00, B32B 7/04, B32B 25/00, B32B 25/08, B32B 27/00, B32B 27/08, B32B 5/02

(54) **Registered stretch laminate and methods for forming a registered stretch laminate**

(30) Priority: 13.06.2011 US 201113159111
(71) Applicant: Curt G. Joa, Inc., Sheboygan Falls, Wisconsin 53085 (US)
(72) Inventor: Handziak,, Perry, Belgium, WI Wisconsin 53004 (US); Peterson,, Daniel A, Sheboygan, WI Wisconsin 53081 (US)
(74) Representative: Dee, Ian Mark

(57) **Abstract**

An elastic netting like product is carried between two or more outer layers of material, such as nonwoven or non-stretch material, which are bonded together at the open areas of the netting like structure. The resulting laminate allows for the outer layers of the laminate to be directly bonded to each other without the stretch engine material being introduced into the bond. A directionally oriented pleated laminate carrying an elastomeric layer in between two material layers is also disclosed.

## Description

### Related Applications

This application is a continuation-in-part of co-pending U.S. Patent Application Serial No. 13/159,111, filed 13 June 2011, which is a continuation-in-part of U.S. Patent Application Serial No. 12/381,364, filed 11 March 2009, which claims the benefit of U.S. Provisional Patent Application Serial No. 61/069,111, filed 12 March 2008.

### Background of the Invention

The present invention relates to a laminated material formed for use in consumer products. Consumer products such as disposable hygiene products, cleaning products, non-hygienic applications, such as shoe protectors, form fitting dust covers, soft-fruit protectors, or any number of consumer products where an elastomeric characteristic is desired could employ the disclosed laminate. This invention also relates to methods and apparatuses for processing components of disposable hygiene products. More specifically, the invention relates to manufacturing a stretchable, preferably breathable laminate that is bonded at a plurality of bond sites.

Generally, diapers comprise an absorbent insert or patch and a chassis, which, when the diaper is worn, supports the insert proximate a wearer's body. Additionally, diapers may include other various patches, such as tape tab patches, reusable fasteners and the like. The raw materials used in forming a representative insert are typically cellulose pulp, tissue paper, poly, nonwoven web, acquisition, and elastic, although application specific materials are sometimes utilized. Usually, most of the insert raw materials are provided in roll form, and unwound and applied in assembly line fashion.

In the creation of a diaper, multiple roll-fed web processes are typically utilized. To create an absorbent insert, the cellulose pulp is unwound from the provided raw material roll and pulverized by a pulp mill. Discrete pulp cores are formed by a core forming assembly and placed on a continuous tissue web. Optionally, super-absorbent powder may be added to the pulp core. The tissue web is wrapped around the pulp core. The wrapped core is debulked by proceeding through a colander unit, which at least partially compresses the core, thereby increasing its density and structural integrity. After debulking, the tissue-wrapped core is passed through a segregation or knife unit, where individual wrapped cores are cut. The cut cores are conveyed, at the proper pitch, or spacing, to a boundary compression unit.

While the insert cores are being formed, other insert components are being prepared to be presented to the boundary compression unit. For instance, the poly sheet is prepared to receive a cut core. Like the cellulose pulp, poly sheet material is usually provided in roll form. The poly sheet is fed through a splicer and accumulator, coated with an adhesive in a predetermined pattern, and then presented to the boundary compression unit. In addition to the poly sheet, which may form the bottom of the insert, a two-ply top sheet may also be formed in parallel to the core formation. Representative plies are an acquisition web material and a nonwoven web material, both of which are fed from material rolls, through a splicer and accumulator. The plies are coated with adhesive, adhered together, cut to size, and presented to the boundary compression unit. Therefore, at the boundary compression unit, three components are provided for assembly: the poly bottom sheet, the core, and the two-ply top sheet.

A representative diaper chassis comprises nonwoven web material and support structure. The diaper support structure is generally elastic and may include leg elastic, waistband elastic and belly band elastic. The support structure is usually sandwiched between layers of the nonwoven web material, which is fed from material rolls, through splicers and accumulators. The chassis may also be provided with several patches, besides the absorbent insert. Representative patches include adhesive tape tabs, acquisition layer, ears, frontal tape, graphic appliqué, poly barrier, and resealable closures.

The process utilizes two main carrier webs; a nonwoven web which forms an inner liner web, and an outer web that forms an outwardly facing layer in the finished diaper. In a representative chassis process, the nonwoven web is slit at a slitter station by rotary knives along three lines, thereby forming four webs. One of the lines is on approximately the centerline of the web and the other two lines are parallel to and spaced a short distance from the centerline. The effect of such slicing is twofold; first, to separate the nonwoven web into two inner diaper liners. One liner will become the inside of the front of the diaper, and the second liner will become the inside of the back of that garment. Second, two separate, relatively narrow strips are formed that may be subsequently used to cover and entrap portions of the leg-hole elastics. The strips can be separated physically by an angularly disposed spreader roll and aligned laterally with their downstream target positions on the inner edges of the formed liners.

After the nonwoven web is sliced, an adhesive is applied to the liners in a predetermined pattern in preparation to receive leg-hole elastic. The leg-hole elastic is applied to the liners and then covered with the narrow strips previously separated from the nonwoven web. Adhesive is applied to the outer web, which is then combined with the assembled inner webs having elastic thereon, thereby forming the diaper chassis. Next, after the elastic members have been sandwiched between the inner and outer webs, an adhesive is applied to the chassis. The chassis is now ready to receive an insert.

To assemble the final diaper product, the insert must be combined with the chassis. The placement of the insert onto the chassis occurs on a placement drum or at a patch applicator. The inserts are provided to the chassis on the placement drum at a desired pitch or spacing. The generally flat chassis/insert combination is then folded so that the inner webs face each other, and the combination is trimmed. A sealer bonds the webs at appropriate locations prior to individual diapers being cut from the folded and sealed webs.

Roll-fed web processes typically use splicers and accumulators to assist in providing continuous webs during web processing operations. A first web is fed from a supply wheel (the expiring roll) into the manufacturing process. As the material from the expiring roll is depleted, it is necessary to splice the leading edge of a second web from a standby roll to the first web on the expiring roll in a manner that will not cause interruption of the web supply to a web consuming or utilizing device.

In a splicing system, a web accumulation dancer system may be employed, in which an accumulator collects a substantial length of the first web. By using an accumulator, the material being fed into the process can continue, yet the trailing end of the material can be stopped or slowed for a short time interval so that it can be spliced to leading edge of the new supply roll. The leading portion of the expiring roll remains supplied continuously to the web-utilizing device. The accumulator continues to feed the web utilization process while the expiring roll is stopped and the new web on a standby roll can be spliced to the end of the expiring roll.

In this manner, the device has a constant web supply being paid out from the accumulator, while the stopped web material in the accumulator can be spliced to the standby roll. Examples of web accumulators include that disclosed in U.S. Patent Application Serial No. 11/110,616, which is commonly owned by the assignee of the present application, and incorporated herein by reference.

### Summary of the Invention

The present invention relates to an elastic netting like product, such as that produced and commercially available by CONWED, carried between two or more outer layers of laminate. The open areas of the netting like structure are registered bond points.

This allows the netting to retract between the bond points, pulling the material together in a gathering type fashion, but preferably without introducing the elastic netting product into the bond sites (however it may be desired in certain laminate configurations to have elastics within the bond). The netting is applied preferably under tension/elongated prior to bonding the outer layers, and after the outer layers are bonded, the netting is allowed to relax, resulting in a gathering type reaction from the outer layers.

The method allows for the outer layers of the laminate to be directly bonded to each other without the stretch engine material being introduced into the bond, except if it is desired to bond the stretch engine material into the laminate in certain locations (or a combination of both). Typically the stretch material differs from the outer cover material, making it difficult to bond non-homogeneous layers together, and allowing a strong bond to be created in the absence of a stretch engine.

The resulting laminate can be unidirectional or bi-directional in its stretch characteristics, depending on the laminate characteristics desired. Any number of stretching characteristics can be applied to the laminate depending on the webbing itself (e.g., cross strand oriented). Further, different stretch states at the time and point of bonding can be used to impart different stretch directions and conditions.

An additional step, following formation of the laminate, is that the laminate can be passed through nip rollers or another de-tensioning device, after which the laminate can be passed around a wrap-around device. The result is a novel laminate having a pleated characteristic. The registered laminate pleats (the unbounded portions) assume a directional orientation when passed around a roller or some other compression device. This can also be described as shingling or directional pleating.

### Brief Description of the Drawings

Fig. 1 is a schematic view of an apparatus for forming a registered stretch laminate;
Fig. 2 is a schematic view of the laminate formed thereby;
Fig. 3 is a top view of the elastic layer of the present invention in a first stretched state, and, following bonding, a second relaxed state;
Fig. 4 is a top view of a representative elastic layer, with bond sites between the net like fibers of the elastic layer.
Figs. 5-8 are top views of alternate embodiments of an elastic layer.
Fig. 9 is a schematic view of an apparatus for forming a multi-layered registered stretch laminate;
Fig. 10 is a side view of a tuck roller and a registration roller system for forming a multi-layered stretch laminate having machine and cross-machine direction stretch imparted to the laminate;
Fig. 11 is a side view of a tuck roller and a registration roller system for forming a three (or more) layered stretch laminate having machine and cross-machine direction stretch imparted to the laminate;
Figs. 12a and 12b are front views, with portions exploded, of the tuck roller and registration roller system carrying materials for forming a multi-layered stretch laminate having machine and cross-machine direction stretch imparted to the laminate;
Figs. 13a and 13b are top views of the tuck roller and registration roller system carrying materials for forming a multi-layered stretch laminate having machine and cross-machine direction stretch imparted to the laminate, with the bonding points registered to bond between strands of the mesh-like stretch material;
Fig. 14 is a side view of the tuck roller and registration roller system carrying materials for forming a multi-layered stretch laminate having machine and cross-machine direction stretch imparted to the laminate, with a downstream bonding unit to bond the laminate in desired areas;
Fig. 15 is a schematic view of an apparatus for forming a multi-layered registered stretch laminate passed through a de-tensioning device and a wrap-around device to impart a directionally oriented pleated characteristic upon the laminate;
Fig. 16 is a side view of a de-tensioned laminate, prior to be passed around a wrap-around device;
Fig. 17 is a side view of a directionally oriented pleated laminate.

### Description of the Preferred Embodiment

Although the disclosure hereof is detailed and exact to enable those skilled in the art to practice the invention, the physical embodiments herein disclosed merely exemplify the invention which may be embodied in other specific structures. While the preferred embodiment has been described, the details may be changed without departing from the invention, which is defined by the claims.

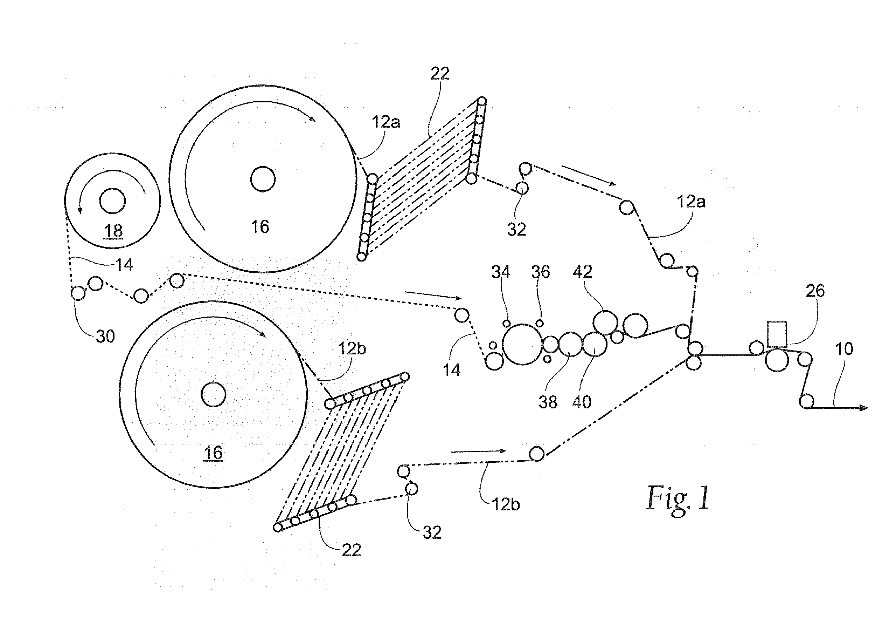

Referring now to Fig. 1, a schematic view of an apparatus for forming a registered stretch laminate is shown. A blocking isolation s-wrap 30 can be provided for carrying and tensioning elastomeric layer 14.

Elastomeric layer 14 is preferably a net-like material, defined by strands bonded at crossing points between strands. Plastic netting with appropriate elastomeric properties create a stretch-engine that allows materials that are not stretchable to stretch.

The integral joints of such a net-like material 14 provide strength to materials and help maintain dimensional stability in products. In addition, the joints create a consistent web for a cleaner and smoother manufacturing process. The web-like structure of such a net-like material 14 is easier to handle than individual strands and requires less down time for strand breaks. Preferably, such a net-like material 14 has stretch properties in at least one dimension, but it is also noted that a net like structure have little or no stretch could be employed if desired.

Net-like material 14 enters a first cross machine direction stretch wheel 34 on one side of the web 14 in the direction of travel, and then a second cross machine direction stretch wheel 36 on the other side of the web 14 in the direction of travel. First, second and third stretch rollers 38, 40, and 42 are provided. In conjunction with the stretch wheels 34 and 36, and the stretch rollers 38, 40 and 42, the elastomeric layer 14 is stretched in a direction and tension that is user defined based on preference of the elasticity of the lamination 10. It is noted that stretching can be supplied to elastic layer 14 in any of the cross machine direction, the machine direction, or a combination of both, depending on the desired end result. It is preferred that the elastic layer 14 being carried between non-elastomeric layers 12a and 12b (introduced by supply rolls 16 and accumulator systems 22) be in a stretched state before the bonding operation takes place.

In an alternate embodiment and construction technique, the laminate could first be formed with the elastic material in an unstretched and/or non-activated state, with bonds formed between the outer layers, and then stretch characteristics are imparted to the created laminate through techniques such as heat, radiation, or tension.

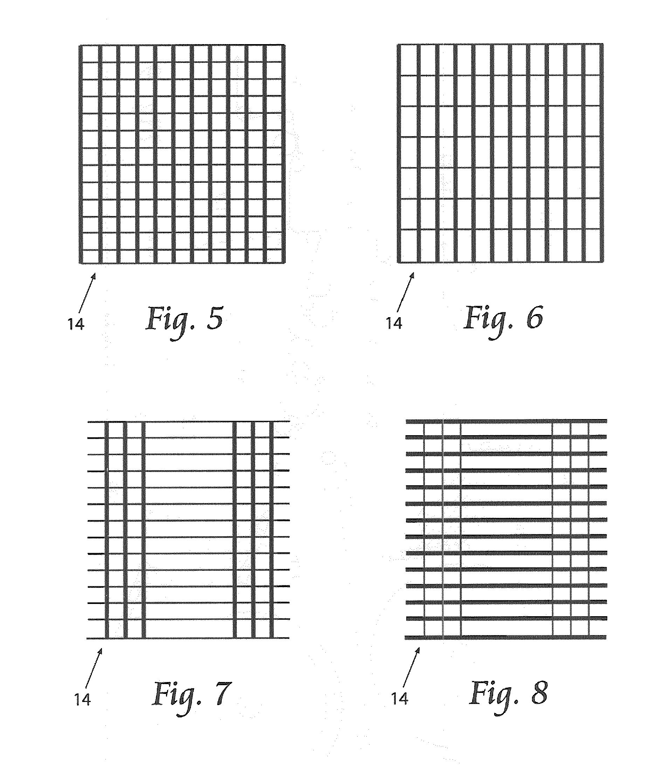

Referring now to Figs. 5-8 top views of alternate embodiments of an elastic layer 14, are shown. The stretch engine webbing or net-like material 14 can be made of a non-uniform matrix of strands to vary the stretch characteristics desired. For example, as shown in Fig. 5, a stiffer vertical strand material is shown relative to a more pliable strand material in the horizontal orientation. The strand count can be varied across the length or width of the web to increase or decrease stretchability in either direction as desired, as shown in Fig. 6. Figs. 7 and 8 show alternate ways of varying the stretch characteristics, including varying distance between strands, varying strand material between the machine and cross-machine direction, varying strand count, varying the density of the weave, and using different bond patterns at different bond points.

If these different strand types, for instance stretchy and stiff, are used in cross strands and material direction strands, the stretch characteristics will likewise reflect the strand composition.

An ultrasonic bonding station 26 is provided to join the non-elastomeric layers 12a and 12b, with the stretched elastomeric layer 14 sandwiched between the non-elastomeric layers 12a and 12b. Because the elastomeric layer 14 has been stretched, yet the non-elastomeric layers 12a and 12b have not been stretched, when the two layers are joined, the elastomeric layer 14 still will have stored the stretch. In an alternate embodiment, any one, two or three of the elastomeric layer 14 and the non-elastomeric layers 12a and 12b are bonded in a stretched configuration. Alternatively, none of the elastomeric layer 14 and the non-elastomeric layers 12a and 12b are bonded in a stretched configuration. The stretch can be imparted, if desired, after formation of the laminate.

Bonding station 26 can provide any method of bonding such as ultrasonic, thermal pressure, registered adhesive, or any combination thereof, depending on user preference for machine configuration.

Non-elastomeric layers 12a and 12b can be of any suitable material, and they themselves could be a laminate.

The resulting laminate can be unidirectional or bi-directional in its stretch characteristics, depending on the laminate characteristics desired. Any number of stretching characteristics can be applied to the laminate depending on the webbing itself (e.g., cross strand oriented). Further, different stretch states at the time and point of bonding can be used to impart different stretch directions and conditions.

Next, the elastomeric layer 14 is taken off of tension, which results in a gathering of the elastomeric layer 14 to create the preferred stretchable laminate.

In one known type of accumulator, the swinging dancer arm type, there is a set of spaced apart rollers on a swingable dancer arm cooperating with another set of rollers on an arm that may be stationary or swingable. A web is looped back and forth between the sets of rollers on opposed arms in a serpentine fashion. When the swingable arm is swung away from the other arm a substantial length of web is accumulated. During normal running of the web the arms will be urged to their maximum practical separation from each other to accumulate the maximum length of web. If the infeed web is slowed or stopped for a short time the tension in the web urges the arms to the minimum separation position in order to make the accumulated web available to the machine. After infeed to the accumulator is resumed the arms separate again and return to their original position to accumulate and store another length of web.

In another known type of accumulator, the linear sliding carriage type, there is a set of rollers mounted on a movable carriage which can run linearly toward or away from a set of corresponding rollers which may either be stationary or similarly slidably mounted. During normal operation of the accumulator, the two sets of rollers will be slid to their maximum practical separation to accumulate the maximum amount of web. If the infeed supply to the web accumulator is slowed or stopped, the rollers will be slid toward each other to allow the stored web to be paid out. As the web infeed is returned to regular operational speed the movable rollers slide back toward the original position to accumulate another length of web. Metering stations 32 can be provided to analyze the speed of the infeed of the layers 12a and 12b, and to assist in determining how much material remains on infeed rolls.

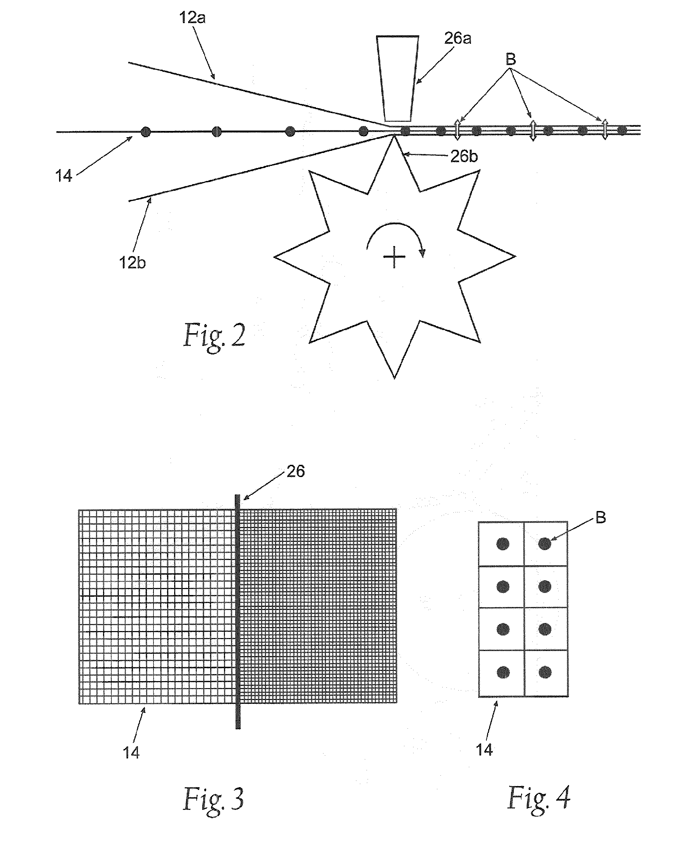

Referring now to Fig. 2, a schematic view of the laminate formed by the process described above is shown. As can be seen, stretchable net-like material 14 is fed, in a stretched condition, into the bonding station 26 comprising horn 26a and anvil 26b. At the bonding station 26, layers 12a and 12b sandwich the stretched net-like material 14, and after bonding together layers 12a and 12b, net-like material 14 is allowed to relax.

Referring now to Fig. 3, a top view of the net-like material 14 is shown in a first stretched state to the left of bonding station 26, and, following bonding at bonding station 26, a second relaxed state to the right.

Referring now to Fig. 4, a top view of a net-like material 14 is shown without layers 12a and 12b. In this view, preferably bond sites B are shown between the net like fibers of the net-like material 14. Any number of bond patterns can be applied, such as geometric shapes such as circles, pyramids, half moons, x-shaped, or combinations of them for different aesthetics and material characteristics as desired.

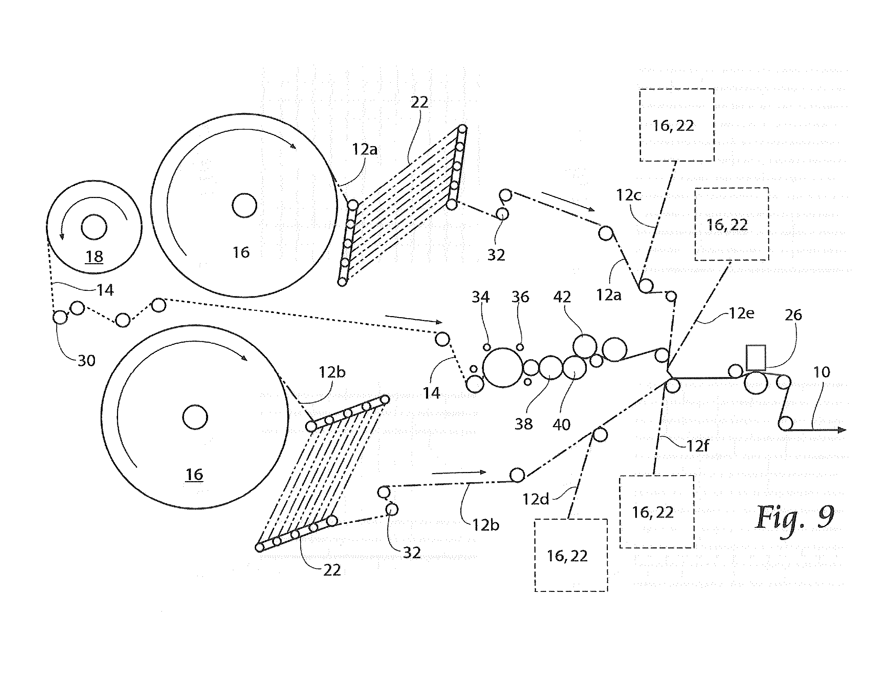

Referring now to Fig. 9, a schematic view of an apparatus for forming a multi-layered registered stretch laminate is shown. In this embodiment, several additional plies of material can be introduced into the laminate formation. Shown are additional layers 12c, 12d, 12e and 12f, preferably introduced by additional supply rolls 16, and accumulator systems 22. Additional layers 12c, 12d, 12e and 12f can be of any material based on the desired characteristics of the final registered stretch bond laminate. The material can be elastic, inelastic, woven, non-woven, absorbent etc. In its broadest sense, the present invention is to register net-like material of any construction between two or more facing materials, producing a bonded laminate.

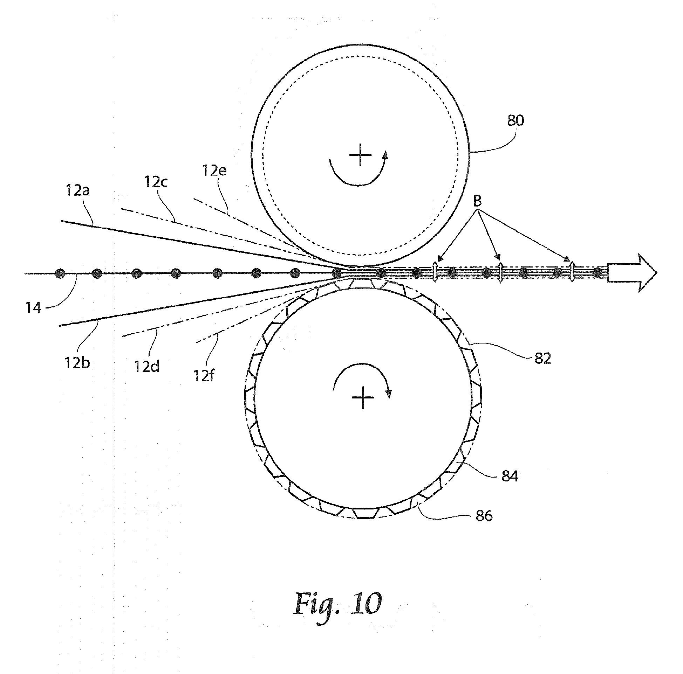

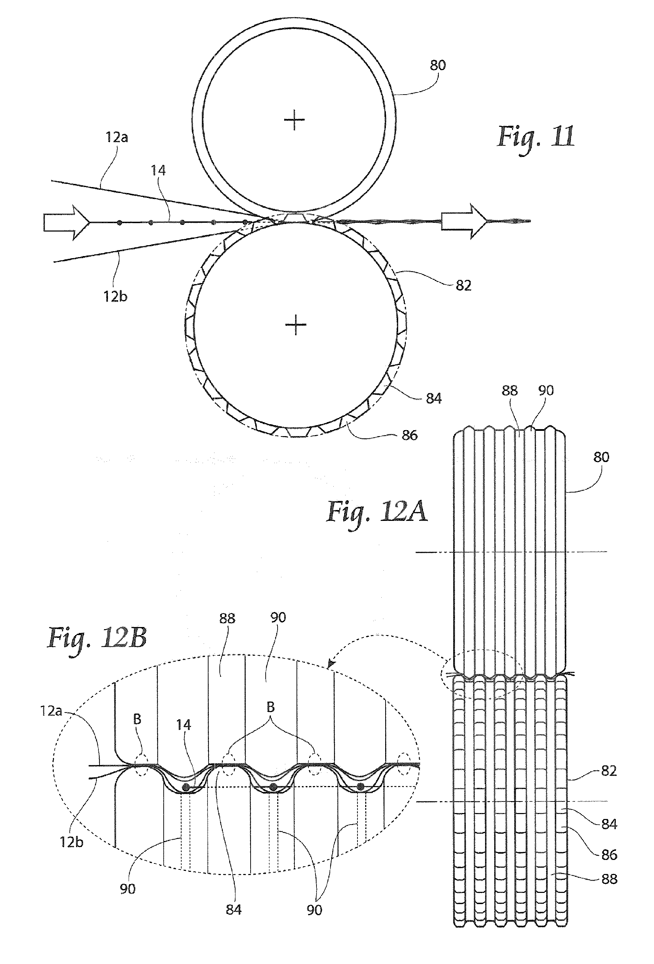

Referring now to Figs. 10 and 11, a side view of a tuck roller 80 and a registration roller 82 system for forming a multi-layered stretch laminate having machine and cross-machine direction stretch imparted to the laminate is shown. The embodiment shown in Fig. 11 is a three layer laminate while the embodiment of Fig. 10 shows five layers. More or less layers can be provided to the tuck roller 80 and registration roller 82 system as desired to form a layer having the desired characteristics.

Preferably this tuck roller 80 and registration roller 82 system is positioned either just before, or where the ultrasonic bonding station 26 is shown in Fig. 9.

Both the tuck roller 80 and registration roller 82 are preferably drum type structures, and vacuum can be applied to the tuck roller 80 and registration roller 82 if desired (for instance by ports or channels 90, as shown in Fig. 12b). Vacuum can be applied to assist drawing materials 12a, 12b and 14 into the valleys 88 of the registration roller 82, between dips 86 in the cross-machine direction as will be described with reference to Figs. 12a and 12b. The tuck roller 80 and registration roller 82 are preferably closely spaced together.

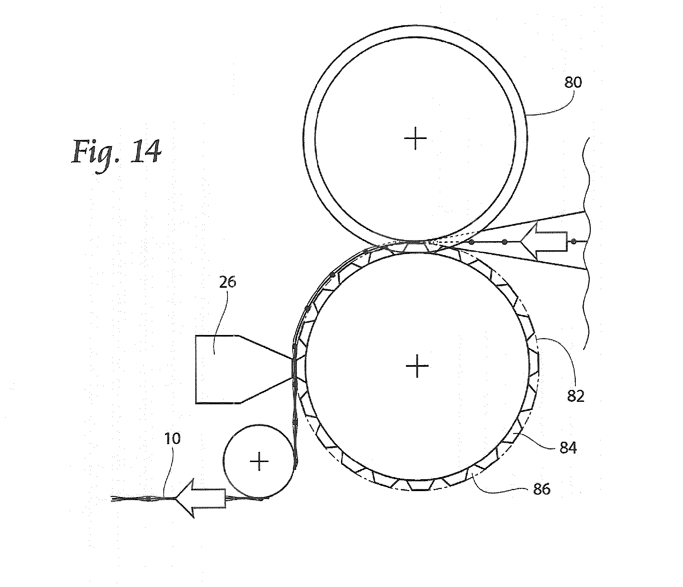

In an alternative embodiment, one of the cooperating rolls 80 or 82 would serve as a rotary horn, or a stationary horn (e.g., Fig. 14) in an ultrasonic horn/anvil combination. The bond patter could be located either on the ultrasonic or heat or pressured element, and the pattern could be provided either on the rolls 80 or 82, nested between the two or on a fixed blade.

Referring now to Figs. 12a and 12b, front views, with portions exploded, of the tuck roller 80 and registration roller 82 system are shown. The tuck roller 80 has valleys 88 and ridges 90. The valleys 88 of the tuck roller 80 cooperate with and accept peaks 84 and dips 86 present on the registration roller 82. Similarly, the ridges 90 of the tuck roller 80 cooperate with and are accepted by the valleys 88 of the registration roller 82.

Referring to the close up view of Fig. 12b, one role of the tuck roller is to depress layers 12a, 14 and 12b into the valleys 88 of the registration roller 82. Because additional material from all three layers (or more or less layers, such as in the embodiment shown on Fig. 10) is pushed into the valleys 88 of the registration layer, a cross-machine direction stretch can be imparted onto the laminate when bonds B are formed at the positions shown where the peaks 84 of the registration roller contact with the valleys 88 of the tuck roller 80.

It is noted that the peaks 84 and dips 86 of the registration roller 82, along with the valleys 88 of the registration roller 82, are registered with the stretch material 14. For instance, the strands of the mesh-like stretch material 14 that extend in the machine direction are carried in the valleys 88 of the registration roller 82. Likewise, the strands of the mesh-like stretch material 14 that extend in the cross-machine direction are carried in several dips 86 of the registration roller 82 at the same distance in the machine direction. Because the dips 86 of the registration roller 82 provide relief between the registration roller 82 and the tuck roller 80, the cross-machine direction strands of the mesh 14 are allowed to be carried between contact points and not bonded themselves to the layers 12a or 12b.

However, an occasional mishit or contact of the strands of the fabric 14 may occur. This mishit can in some circumstances be intentional and beneficial. For instance, the peaks 84 or dips 86 of the registration roller 82 could be configured to intentionally contact and bond some of the strands 14 to the material 12a o 12b, for instance if different shapes, patterns or stretch characteristic are desired. Additionally, a momentary re-phase of the cooperating rolls 80 and 82 could also impart the material 14 into the bond sites if desired. A registered stretch bond laminate is formed stretchable in a cross-machine direction.

Cooperating rolls 80 and 82 can be provided with the capability of pressure or thermal bonding materials carried between them. For instance, the peaks 84 of the registration roll could contact the opposing valleys 88 on the tuck roller to pressure or thermally bond materials 12a and 12b together (and avoid, if desired, bonding the strands of the elastic mesh 14). Because the materials 12a and 12b are tucked, stretch is provided in the cross-machine direction.

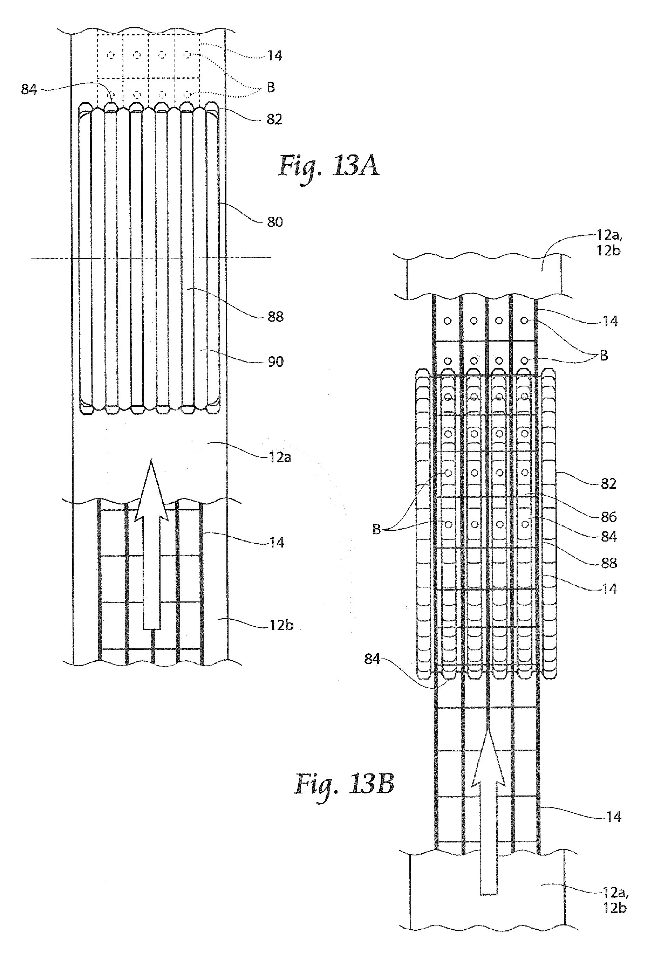

Referring now to Figs. 13a and 13b, a top view of the tuck roller 80 and registration roller 82 system is shown. As can be seen, bonds B are formed at void spaces in the mesh 14. Referring to Fig. 13b, it is seen that the strands of the mesh 14 are carried by the valleys 88 and the dips 86 of the registration roller 82, and that the peaks 84 extend through the void spaces of the mesh 14.

Referring now to Fig. 14, an alternate embodiment of the tuck roller 80 and registration roller 82 system is shown. In this embodiment, a downstream bonding unit 26 is provided to form the desired bonds B in the laminate in desired areas. This bonding station 26 can be in addition to, or in lieu of, the pressure or temperature bonding provided between the tuck roller 80 and registration roller 82 as previously described.

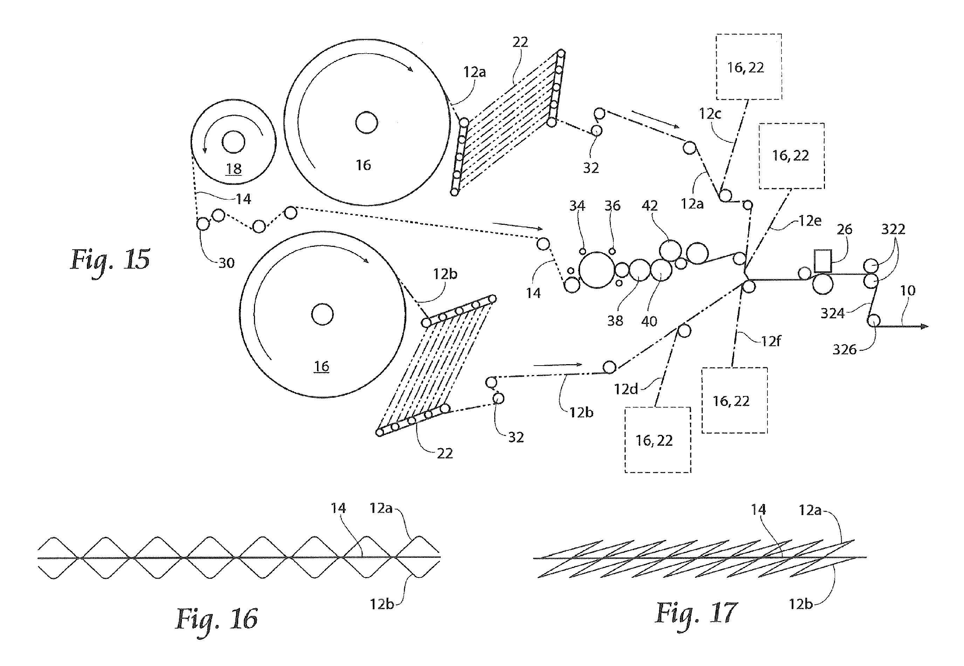

Referring now to Fig. 15, a schematic view of an apparatus for forming a multi-layered registered stretch laminate 12a/14/12b passed through a de-tensioning device 322 and a wrap-around device 326 to impart a directionally oriented pleated characteristic upon the laminate is shown.

Referring now to Figs. 15-17 together, an additional optional step, following formation of the laminate 12a/14/12b as previously described, is that the laminate 12a/14/12b can be passed through nip rollers or 322. Nip rollers 322 are used because it is desirable to have higher tension on the laminate 12a/14/12b during formation of the bonds between the layers 12a and 12b. The nip rolls 322 in effect create in isolation two different tension zones, a first tensioned zone for laminate creation and bonding upstream of nip rolls 322, and a second relatively de-tensioned zone downstream of nip rolls 322 to impart a directionally oriented pleat to the laminate 12a/14/12b. The elastomeric layer 14 is taken off of significant tension, which results in a gathering of the elastomeric layer 14 to create a stretchable laminate 12a/14/12b as shown in Fig. 16. This allows the laminate following the nip rollers 322 to be de-tensioned to some degree in de-tension zone 324 and further downstream in the process.

After passing laminate 12a/14/12b through the de-tension zone 324, the laminate 12a/14/12b can be passed around a wrap-around device 326. The wrap-around device 326 (or another set of nip-rollers) carries the laminate 12a/14/12b around a portion of its periphery. The result, after passing the laminate 12a/14/12b around the wrap-around device 326, is a novel laminate 12a/14/12b having a directionally pleated characteristic as shown in Fig. 17. Fig. 17 is a side view of a directionally oriented pleated laminate 12a/14/12b following passage of the laminate 12a/14/12b past the wrap-around device 326. As can be seen in Fig. 17, the registered laminate 12a/14/12b pleats (the unbounded portions) assume a directional orientation when passed around a roller 326 or some other type of compression device. In Fig. 17, the directional orientation is a slanted orientation, with the materials 12a and 12b assuming a slant in the same direction. The result is that when considered vertically, the materials 12a and 12b can present several layers for a material to pass through for instance if the material is desired to be used as a filter medium. This effect can also be described as shingling or directional pleating.

Next, the directionally oriented pleated laminate 12a/14/12b can be passed downstream for further processing as desired; e.g. rewinding, use in a disposable product, severing into discrete pieces, use as a filter media etc.

The aspect of the invention described with respect to Figs. 15-17 can be considered a registered bonded laminate comprising a first material layer, an elastomeric layer, a first material layer, a second material layer, said first and second material layers bonded together, carrying between them said elastomeric layer, said first and said second material layers forming a series of directionally oriented pleats. It can also be considered a method of forming pleats in a laminate comprising coupling a first elastic material to a second material layer while said first elastic material is under tension to form a laminate, de-tensioning said first elastic material, and creating directionally oriented pleats on said second material layer. A third material layer can also be coupled to said first elastic material, and directionally oriented pleats are also created on said third material layer.

The foregoing is considered as illustrative only of the principles of the invention. Furthermore, since numerous modifications and changes will readily occur to those skilled in the art, it is not desired to limit the invention to the exact construction and operation shown and described. While the preferred embodiment has been described, the details may be changed without departing from the invention, which is defined by the claims.

## Claims

1. A registered bonded laminate comprising:
a first material layer;
an elastomeric layer, the elastomeric layer comprising a net like structure having strands intersecting at crossing points between said strands, having a plurality of void spaces between said intersecting crossing points;
a second material layer;
said first and second material layers bonded through said void spaces of said net like structure.

2. A registered bonded laminate according to claim 1, wherein said first and second material layers are also bonded through at least one strand.

3. A registered bonded laminate according to claim 1, said stretch bond laminate stretchable in a machine direction.

4. A registered bonded laminate according to claim 1, said stretch bond laminate stretchable in a cross-machine direction.

5. A registered bonded laminate according to claim 1, said stretch bond laminate stretchable in a machine direction and a cross-machine direction.

6. A registered bonded laminate according to claim 1, said stretch bond laminate further comprising a third material layer carried between said first material layer and said stretch elastomeric layer.

7. A registered bonded laminate according to claim 6, said stretch bond laminate further comprising a fourth material layer carried between said second material layer and said stretch elastomeric layer.

8. A registered bonded laminate comprising a first material layer;
an elastomeric layer;
a first material layer;
a second material layer;
said first and second material layers bonded together, carrying between them said elastomeric layer;
said first and said second material layers forming a directionally oriented pleat.

9. A registered bonded laminate comprising:
a first material layer;
an elastomeric layer;
a first material layer;
a second material layer;
said first and second material layers bonded together, carrying between them said elastomeric layer;
said first and said second material layers forming a series of directionally oriented pleats.

10. A method of forming pleats in a laminate comprising:
coupling a first elastic material to a second material layer while said first elastic material is under tension to form a laminate;
de-tensioning said first elastic material;
creating directionally oriented pleats on said second material layer.

11. A method according to claim 10, said method further comprising coupling a third material layer to said first elastic material.

12. A method according to claim 10, said method further comprising creating directionally oriented pleats on said third material layer.

13. A method according to claim 12, said directionally oriented pleats on said second material layer and said directionally oriented pleats on said third material layer being directionally oriented in the same direction.
